# EUROPEAN PATENT APPLICATION

(11) **EP 4 555 871 A1**
(43) Date of publication of application: **21.05.2025**
(21) Application number: 22951196.9
(22) Date of filing: 15.07.2022
(51) Int. Cl.: A23L 29/231

(54) **PARTICULATE COMPOSITION, GEL COMPOSITION AND FOOD PRODUCT**

(71) Applicant: House Foods Corporation, Higashi-Osaka-shi, Osaka 577-8520 (JP); House Foods Group Inc., Higashiosaka-shi, Osaka 577-8520 (JP)
(72) Inventor: ISHINO Shiho, Higashiosaka-shi, Osaka 577-8520 (JP); SASAKO Hiroshi, Higashiosaka-shi, Osaka 577-8520 (JP); YAHARA Seiji, Higashiosaka-shi, Osaka 577-8520 (JP)
(74) Representative: Schön, Christoph
(86) International application number: PCT/JP2022/027894
(87) International publication number: WO 2024/013988

(57) **Abstract**

The purpose of the present invention is to provide a particulate composition, a gel composition and a food product. A particulate composition according to the present invention which is used to prepare a gel composition by mixing the same with water, wherein pectin, a divalent metal ion component and an acid component are contained therein, and the divalent metal ion component and/or the acid component are slowly dissolved in the water.

## Description

### Technical Field

The present invention relates to a particulate composition, a gel composition, and a food product.

### Background Art

Gel food products such as jellies, puddings, and mousses have been known, which are obtained by solidifying liquid materials using a gellant. Gel food products are widely used as favorite foods and beverages in view of the mouthfeel such as elasticities and favorable textures.

As one of gel food products, one using pectin as a gellant has been known. Pectin has a property that the pectin is gelated by reacting with divalent metal ions such as calcium ions. A gel food product using pectin is produced by adding pectin and divalent metal ions to water, which is heated and dissolved, and cooled to be gelated.

In recent years, the developments of gel food products having unique mouthfeels have been attempted. For example, Patent Literature 1 and Patent Literature 2 disclose non-uniform gel compositions in which different types of gels are mixed. Since having a mixture of different types of gels having different elasticities and sizes, non-uniform gel compositions exhibit unique textures and firmnesses in eating. Such gel compositions have been applied to artificial fruit flesh that reproduces mouthfeels of fruits by means of gel food products, and the like.

### Citation List

### Patent Literature

Patent Literature 1: Japanese Patent Application Publication No. 2004-194661
Patent Literature 2: Japanese Patent Application Publication No. Hei 9-275915

### Summary of Invention

### Problems to be solved by the invention

It is desirable that a gel food product can be easily prepared not only industrially but also at home and restaurant. The conventional gel food products need to be cooled and solidified after dissolution with heating. If a gel food product can be solidified in a warm state, work time and work load can be significantly reduced.

In addition, the non-uniform gel compositions disclosed in Patent Literature 1 and Patent Literature 2 require cumbersome preparation procedures. For this reason, these are not suitable to be prepared at home and have only been produced industrially.

The present invention has been made in view of these problems, and an object thereof is to provide a particulate composition for easily preparing a gel composition, the particulate composition having a high applicability to food products.

### Solution to Problem

As a result of earnestly conducting studies, the present inventors have found that in the case where a particulate composition comprises a pectin, a divalent metal ion, and an acid component, wherein the divalent metal ion and/or the acid component has been made to slowly dissolve in water, when the particulate composition is mixed with water to form a gel composition, the gel composition can be solidified in a short time, and the gel composition is a non-uniform gel composition. Moreover, the present inventors have found that the gel composition can be used in the same manner as the conventional gel food products such as a jelly, a pudding, and a mousse, but also has a usage that cannot be achieved by the conventional gel food products.

Specifically, the present invention provides the following.
[1] A particulate composition for preparing a gel composition by mixing with water, comprising a pectin, a divalent metal ion component, and an acid component, wherein the divalent metal ion component and/or the acid component has been made to slowly dissolve in water.
[2] The composition according to the [1], wherein the divalent metal ion component made to slowly dissolve is such that when 0.16 g of the divalent metal ion component made to slowly dissolve is added to 100 mL of water at 75°C, it takes 5 seconds or more for a concentration of the divalent metal ion component in the water to reach 80% of a final concentration thereof.
[3] The composition according to the [1] or [2], wherein the acid component made to slowly dissolve is such that when 0.3 g of the acid component made to slowly dissolve is added to water of 100 mL at 70°C, it takes 15 seconds or more for pH of the water to reach pH 4.0 to 5.0.
[4] The composition according to any one of the [1] to [3], wherein after the composition is mixed with water, it takes 5 seconds or more for a concentration of the divalent metal ion component in the mixture to reach 80% of a final concentration thereof.
[5] The composition according to any one of the [1] to [4], wherein after the composition is mixed with water, it takes 15 seconds or more for the mixture to reach a final pH thereof.
[6] The composition according to any one of the [1] to [5], wherein the divalent metal ion component and/or the acid component is integrated with a water-disintegrable substance to be made to slowly dissolve in water.
[7] The composition according to any one of the [1] to [6], wherein the divalent metal ion component and/or the acid component is formed into a granule to be made to slowly dissolve in water.
[8] The composition according to the [7], wherein when water at 75°C and the particulate composition are mixed, the granules maintain a granular form at the time of 30 seconds after mixing, and the granules become invisible at the time of 5 minutes after mixing.
[9] The composition according to any one of the [1] to [8], further comprising a gellant other than the pectin.
[10] The composition according to the [9], wherein the gellant is one or more selected from the group consisting of agar, gellan gum, starch, and sodium alginate.
[11] The composition according to any one of the [1] to [10], which is a particulate composition for mixing with warm water to prepare a gel composition.
[12] A gel composition prepared by using the particulate composition according to any one of the [1] to [11].
[13] A food product comprising the particulate composition according to any one of the [1] to [11].
[14] A food product comprising a gel composition prepared by using the particulate composition according to any one of the [1] to [11].

### Advantageous Effects of Invention

The present invention makes it possible to provide a particulate composition for easily preparing a gel composition, the particulate composition having a high applicability to food products.

### Description of Embodiments

Hereinafter, the present invention will be described in detail. Note that preferable aspects and more preferable aspects, the like shown as examples below can be used in combination as appropriate regardless of expressions such as "preferable" and "more preferable". In addition, the expressions of numerical ranges are only examples, and ranges appropriately obtained by combining the upper limit and the lower limit of each range as well as numerical values of Examples can be favorably used. Moreover, terms such as "comprising", "containing", and the like may be read as "essentially consisting of" and "consisting of only".

### <Particulate Composition>

Hereinafter, a particulate composition of the present invention will be described in detail.

The particulate composition of the present invention is a particulate composition for preparing a gel composition by mixing with water, comprising a pectin, a divalent metal ion component, and an acid component, wherein the divalent metal ion component and/or the acid component has been made to slowly dissolve in water.

The term "water" in the present Specification encompasses generally used terms such as "cold water" which is of a relatively low temperature (for example, water at 20°C or less) and "ordinary-temperature water" (for example, water at 20 to 40°C), as well as "warm water" which is of a relatively high temperature (for example, water at 40 to 100°C), and the temperature of the "water" is not particularly limited.

In addition, the types of "water" in the present invention is not particularly limited, and the "water" widely encompasses various types of liquids suitable for eating and drinking, such as juices, coffee, tea, soups, and liquid condiments besides tap water and mineral water. However, it is desirable that the water do not contain a divalent metal ion component or an acid component.

The terms "hot gel" and "hot jelly" in the present Specification indicate gel compositions formed at a product temperature of, for example, 30 to 100°C, and preferably 40 to 95°C. In addition, the terms "hot gel" and "hot jelly" encompass those that maintain the state of gel and those that turn into a sol at ordinary temperature or when cooled to a cool temperature.

### [Pectin]

A Pectin is a composite polysaccharide having, as a main component, polygalacturonic acid in which galacturonic acid and a galacturonic acid methyl ester, which is obtained by methyl-esterifying a carboxyl group of a galacturonic acid, are bonded via α-1,4- linkage. The degree of esterification of a pectin is represented by the proportion of the galacturonic acid methyl ester in the entire pectin molecule, and pectins having a degree of esterification of more than 50% are called high methoxy pectins (HM pectins), and pectins having a degree of esterification of 50% or less are called low methoxy pectins (LM pectins). The pectin used in the present invention is capable of reacting with a divalent metal ion to form a gel, and both of an HM pectin and an LM pectin can be used. The pectin is preferably an LM pectin. The upper limit of the degree of esterification of the pectin used in the present invention is not particularly limited, but is, for example, 50% or 40%. The lower limit of the degree of esterification of the pectin used in the present invention is not particularly limited, but is, for example, 5% or 10%.

The content of the pectin in the particulate composition is preferably 0.1 to 99% by mass, more preferably 0.5 to 50% by mass, and further preferably 1 to 30% by mass, based on the total mass of the particulate composition.

### [Divalent Metal Ion Component]

The divalent metal ion component is a substance that contains divalent metal ions and releases the divalent metal ions when the particulate composition is dissolved in water. The form of the divalent metal ion component includes, for example, the form of a water-soluble salt of divalent metal ions.

The divalent metal ions are metal ions capable of reacting with the pectin and the gellant to form a gel. Specifically, the divalent metal ions include alkaline earth metal ions such as calcium ions and magnesium ions, and are preferably calcium ions. When calcium ions are used as the divalent metal ions, the form of the divalent metal ion component is not particularly limited, but includes, for example, calcium lactate, calcium chloride, tricalcium phosphate, calcium monohydrogen phosphate, calcium dihydrogen phosphate, calcium gluconate, calcium carbonate, calcium citrate, calcium hydroxide, calcium pantothenate, calcium dihydrogen pyrophosphate, calcium sulfate, and the like. The divalent metal ion component is preferably calcium lactate. **In** addition, when calcium ions are used as the divalent metal ions, the divalent metal ion component may be of the form of powder dairy product produced from animal and vegetable milks such as skim milk and whey powder.

The amount of the divalent metal ion component blended in the particulate composition is not particularly limited as long as the amount is in such a range that can form a gel by reacting with the pectin.

The divalent metal ion component is blended in such an amount that when the particulate composition is dissolved in water to form a gel composition, the concentration of the divalent metal ions in the gel composition becomes preferably 0.01 to 300 mM, more preferably 0.1 to 200 mM, and further preferably 1 to 100 mM, for example.

**In** addition, the divalent metal ion component may be blended in an amount of, for example, 0.05 to 50% by mass, preferably 0.1 to 35% by mass, and more preferably 0.2 to 30% by mass, based on the total mass of the particulate composition.

**In** the case where the divalent metal ion component of the present invention is one made to slowly dissolve in water, for example, the divalent metal ion component made to slowly dissolve is such that when 0.16 g of the divalent metal ion component made to slowly dissolve is added to 100 mL of water at 75°C, it takes 5 seconds or more for the concentration of the divalent metal ion component in the water to reach 80% of the final concentration thereof. Alternatively, the divalent metal ion component made to slowly dissolve is such that after the particulate composition is mixed with water, it takes 5 seconds or more for the concentration of the divalent metal ion component in the mixture to reach 80% of the final concentration thereof.

The divalent metal ion component may be integrated with a water-disintegrable substance to be made to slowly dissolve in water. The expression "the divalent metal ion component is integrated with a water-disintegrable substance" means to integrate the divalent metal ion component and a water-disintegrable substance. For example, the divalent metal ion component and the water-disintegrable substance may be integrated by granulating a mixture of the divalent metal ion component and a water-disintegrable substance. Alternatively, the divalent metal ion component and the water-disintegrable substance may be integrated by coating the surfaces of granules of the divalent metal ion component with a water-disintegrable substance.

By integrating the divalent metal ion component with a water-disintegrable substance, the rapid dissolution of the divalent metal ion component is suppressed, so that the dissolution of the divalent metal ion component gradually progresses as the disintegration of the water-disintegrable substance progresses, when the particulate composition of the present invention is mixed with water.

The water-disintegrable substance is not particularly limited as long as the water-disintegrable substance is disintegrated in water when the particulate composition is mixed with water, and the water-disintegrable substance includes, for example, oils and/or fats, emulsifiers, saccharides, dextrins, gelatin, pullulan, shellac, dietary fibers, aqueous alcohol-soluble proteins, brewer's yeast cell walls, calcium citrate, and the like. The water-disintegrable substance is preferably calcium citrate.

**In** general, the rate of dissolution of the divalent metal ion component integrated with a water-disintegrable substance depends on the properties and blended amount of the water-disintegrable substance. The amount of the water-disintegrable substance blended is not particularly limited as long as the above-described slow dissolving characteristic can be achieved.

The divalent metal ion component may be formed into a granule to be made to slowly dissolve in water. The rate of dissolution of the divalent metal ion component in water is made slow by granulating the divalent metal ion component itself or together with another component. The divalent metal ion component made to slowly dissolve by granulation is preferably such that when water at 75°C and the particulate composition are mixed, the granules of the divalent metal ion component maintain its granular form at the time of 30 seconds after mixing, and the granules become invisible at the time of 5 minutes after mixing.

**In** general, the rate of dissolution of a granulated divalent metal ion component is such that the larger the particle size of the divalent metal ion component, the slower the rate of dissolution of the divalent metal ion component in water. **In** order to achieve the above-described slow dissolving characteristic, the weight-average particle size in the particle size distribution of the divalent metal ion component is preferably 20 to 800 µm, more preferably 40 to 600 µm,and further preferably 100 to 400 µm.

### [Acid Component]

The acid component is a water-soluble acidic substance. The acid component is not particularly limited as long as the acid component is generally used for food products. The acid component includes, for example, organic acids such as citric acid, lactic acid, malic acid, succinic acid, tartaric acid, adipic acid, acetic acid, glacial acetic acid, fumaric acid, glucono-δ-lactone, gluconic acid, and butyric acid as well as inorganic acids such as phosphoric acid, carbonic acid, and hydrochloric acid. In addition, these acid components may be acids derived from fruit juices or fruit juices themselves. The acid component is preferably citric acid.

The amount of the acid component blended in the particulate composition is not particularly limited as long as the amount makes it possible to achieve a desired pH of the gel composition.

The acid component may be blended, for example, in such an amount that the final pH of a gel composition becomes around pH 2 to 6, and preferably around pH 3 to 5 when the particulate composition is dissolved in water to form a gel composition.

In addition, the acid component may be blended in an amount of, for example 0.05 to 40% by mass, preferably 0.1 to 35% by mass, and more preferably 0.2 to 30% by mass, based on the total mass of the particulate composition.

In the case where the acid component of the present invention is an acid component made to slowly dissolve in water, for example, the acid component made to slowly dissolve is such that when 0.3 g of the acid component made to slowly dissolve is added to 100 mL of water at 70°C, it takes 15 seconds or more for the pH of the water to reach pH 4.0 to 5.0. Alternatively, the acid component made to slowly dissolve is such that after the particulate composition is mixed with water, it takes 15 seconds or more for the mixture to reach the final pH thereof.

The acid component may be integrated with a water-disintegrable substance to be made to slowly dissolve in water. By integrating the acid component with a water-disintegrable substance, the rapid dissolution of the acid component is suppressed, so that the dissolution of the acid component gradually progresses as the disintegration of the water-disintegrable substance progresses, when the particulate composition of the present invention is mixed with water. The water-disintegrable substance is as described above. The method for integrating the acid component and a water-disintegrable substance is as described above.

In general, the rate of dissolution of the acid component integrated with a water-disintegrable substance depends on the properties and blended amount of the water-disintegrable substance. The amount of the water-disintegrable substance blended is not particularly limited as long as the above-described slow dissolving characteristic can be achieved.

The acid component may be formed into a granule to be made to slowly dissolve in water. The rate of dissolution of the acid component in water is made slow by granulating the acid component itself or together with another component. The acid component made to slowly dissolve by granulation is preferably such that when warm water at 75°C and the particulate composition are mixed, the granule of the acid component maintains its granular form 30 seconds after the mixing, and the granule becomes invisible after 5 minutes of mixing.

In general, the rate of dissolution of a granulated acid component is such that the larger the particle size of the acid component, the slower the rate of dissolution of the acid component in water. In order to achieve the above-described slow dissolving characteristic, the weight-average particle size in the particle size distribution of the acid component is preferably 20 to 800 µm,more preferably 40 to 600 µm,and further preferably 100 to 400 µm.

### [Another Component]

The particulate composition of the present invention may contain another component that is added to normal food products besides the pectin, the divalent metal ion component, and the acid component. Another component includes, for example, a gellant other than the pectin, a pH adjuster, a fruit juice, a flavor, a coloring agent, a sweetener, a condiment, and the like.

### [Gellant]

The particulate composition of the present invention preferably contains a gellant other than the pectin. A gellant is an additive that is normally used for gelating food products, but in the present invention, the gellant has a function of improving the stability of a non-uniform gel composition. The gellant other than the pectin in the present invention is preferably one or more selected from the group consisting of agar, gellan gum, starch, and sodium alginate.

The amount of the gellant blended is not particularly limited. For example, the gellant may be blended in an amount of, for example 0.05 to 40% by mass, preferably 0.1 to 35% by mass, and more preferably 0.2 to 30% by mass, based on the total mass of the particulate composition.

### [Properties of Particulate Composition]

The particulate composition of the present invention has a characteristic that the particulate composition comprises a pectin, a divalent metal ion component, and an acid component, wherein the divalent metal ion component and/or the acid component are made to slowly dissolve in water.

The present inventors have found that a non-uniform gel composition can be prepared by making a divalent metal ion component and/or an acid component slowly dissolve in water. Without being bound by theory, it is considered that when the particulate composition of the present invention is mixed with water, the reaction of the pectin, which reacts with the divalent metal ion component in low pH range to be gelated, is delayed, and the reaction of the pectin and the divalent metal ions is caused to gradually progress, so that a non-uniform gel containing a granular gel of a size that adds a unique mouthfeel is formed. On the other hand, it is considered that in the case where the divalent metal ion component and the acid component are not made to slowly dissolve, when the particulate composition is mixed with water, the pH of the water instantly drops and the concentration of the divalent metal ion component also instantly increases, and thus the pectin reacts with the divalent metal ion component at once, so that a granular gel having a size that adds a unique mouthfeel is not formed.

That is, according to the present invention, it is possible to easily prepare a non-uniform gel composition only by dissolving the particulate composition in water. This makes it possible to prepare a non-uniform gel composition not only in industrial production but also at home and restaurants.

In addition, the particulate composition of the present invention is dissolved to form a gel composition easily in any of relatively low-temperature "cold water" and "ordinary-temperature water", as well as relatively high-temperature "warm water". In addition, in general, a gel composition is solidified, after water in which a gellant is dissolved is heated, by cooling the water for several hours in a refrigerator or the like. On the other hand, the particulate composition of the present invention is such that the gel composition is solidified, after the particulate composition is dissolved in water, only by leaving the water to stand for several tens of minutes at ordinary temperature. This can significantly reduce the work time and work load.

Moreover, a gel composition prepared by using the particulate composition of the present invention is solidified in a warm state. Therefore, it is possible to easily make a so-called hot gel or hot jelly by dissolving the particulate composition of the present invention in warm water.

### <Gel Composition>

Hereinafter, the gel composition of the present invention will be described in detail.

### [Properties of Gel Composition]

The gel composition of the present invention has many advantages. Although not limiting, the gel composition of the present invention particularly has properties of (1) non-uniform mouthfeel, (2) adhesiveness, (3) dispersibility, (4) heating resistance, (5) solidification in a warm state, and (6) long-term stability.

### (1) Non-uniform Mouthfeel

As described above, the gel composition of the present invention has a structure in which a granular gel having a size that adds a mouthfeel and a non-granular gel that is different from the granular gel. Hence, the gel composition of the present invention has firmness and texture that are unique to a non-uniform gel composition.

The size and number of granules of the granular gel in the non-uniform gel composition affect the hardness of the gel composition itself. Since a large number of large granules of the granular gel are formed in the gel composition of the present invention, the gel composition has elasticity as a whole and exhibits a favorable mouthfeel.

In addition, the gel composition of the present invention can be used as an artificial fruit flesh by utilizing the non-uniform mouthfeel attributable to the granular gel. For example, when the gel composition is combined with a fruit flesh, the mouthfeel of the fruit flesh increases.

In addition, since a normal gel food product or jelly food product is solidly held together, such a product is not suitable for eating with a straw. On the other hand, since the gel composition of the present invention is composed of a granular gel, the gel composition can be easily eaten by using a straw, and is thus favorable for jelly beverages as well.

Moreover, the gel composition of the present invention has an effect of enhancing the mouthfeel and flavor of another material by means of a non-uniform mouthfeel. For example, by integrating a material such as a fruit and the gel composition of the present invention, filling can be added to the fruit by means of the flavor and mouthfeel of the gel composition even when the fruit is not ripe yet. In addition, it is also possible to reduce the amount of a fruit flesh while maintaining the mouthfeel of the fruit flesh by means of the non-uniform mouthfeel of the gel composition of the present invention, which leads to a reduction in cost.

### (2) Adhesiveness

The gel composition of the present invention has a high viscosity. Hence, for example, the gel composition of the present invention can be used to bind and hold ingredients such as fruits together and to coat the surface of a fruit therewith for preventing drying.

In addition, the gel composition of the present invention allows a fruit flesh to be protected and molded by a high adhesiveness thereof. For example, by holding together and molding each drip of a fruit flesh that is susceptible to an impact such as watermelon, sweets that reproduce the shape of watermelon can be provided.

### (3) Dispersibility

The gel composition of the present invention is capable of dispersing and holding another material inside the gel composition. Hence, for example, it becomes possible to provide a gel dessert in which a fruit flesh or the like is uniformly dispersed.

### (4) Heating Resistance

The gel composition of the present invention has a heating resistance. Gelatin, agar, and normal pectin gel melt down when heated at a high temperature, and cannot maintain the state of gel. The gel composition of the present invention maintains the state of gel even when heated at a high temperature (for example, 180 to 250°C) or when applied to a food product immediately after heating at a high temperature. Hence, for example, a food product in which the gel composition of the present invention is applied as a nappage to the surface of a pizza or cake before heating with an oven or immediately after heating with an oven can be provided.

### (5) Solidification in Warm State

As described above, since the gel composition of the present invention is capable of being solidified in a warm state, work time and work load necessary for preparing the gel composition can be significantly reduced. For example, in the case of preparing a food product in which a plurality of gel compositions are combined, such as a multi-layered jelly, this is particularly effective. A multi-layered jelly is normally produced by pouring gel compositions into a container one layer after another, and then cooling and solidifying the gel compositions for several hours. On the other hand, with the gel composition of the present invention, after layers are poured into a container, the layers are solidified only by leaving the layers to stand for several tens of minutes at ordinary temperature, so that the working hours are significantly reduced.

### (6) Long-term Stability

The gel composition of the present invention is capable of maintaining a granular gel over several tens of minutes to several hours after preparation. Moreover, in the case where the particulate composition of the present invention contains a gellant other than the pectin, the stability of the gel composition is improved, making it possible to maintain the granular gel even after the elapse of 24 hours or more from the preparation of the gel composition, for example.

The gel composition of the present invention has many advantages besides the above-described advantages. The gel composition of the present invention has properties such as, for example, having favorable flavor release, being allergen-free, being less affected by enzymes, and being capable of gelation again even after collapse once, as compared with jelly, agar, normal bectin gel, and the like.

### [Method for Producing Gel Composition]

The method for producing the gel composition of the present invention includes the steps of:
(1) mixing the particulate composition of the present invention with water; and
(2) gelating a mixture liquid of the particulate composition and the water.

The temperature of water in step (1) is not particularly limited, but is preferably 30 to 100°C, and more preferably 40 to 95°C.

The gelation conditions for the gel composition in step (2) are not particularly limited, but are preferably such conditions that the product temperature of the gel composition becomes 30 to 100°C, and more preferably such conditions that the product temperature of the gel composition becomes 40 to 95°C, when a hot gel is produced. However, it is of course possible to cool the gel composition to a temperature of, for example, 30°C or less and use the cold gel composition.

### <Food Product>

Hereinafter, the use of the particulate composition of the present invention for food product usage will be described.

A food product (hereinafter, a powder food product) that partially or fully contains the particulate composition of the present invention is provided. In addition, a food product (hereinafter, a gel food product) that partially or fully contains a gel composition prepared by using the particulate composition of the present invention is provided.

### 1. Powder Food Product

A gel food product can be prepared by dissolving the powder food product in water. A gel food product prepared from the powder food product includes, for example, a jelly beverage, an artificial fruit flesh, a sol food product, a patty food product, and a coating agent, and the like, but is not limited to these.

### 1-1. Powder Food Product For Preparing Jelly Beverage

The powder food product can be used to prepare a jelly beverage. Specifically, beverages such as a jelly juice, a jelly coffee, and a jelly tea can be prepared by dissolving the powder food product in beverages such as a juice, coffee, and tea. In addition, when the powder food product is dissolved in warm beverages, beverages such as a hot jelly juice, a hot jelly coffee, and a hot jelly tea can be prepared. In addition, the jelly beverage can be provided as a beverage having an artificial fruit flesh mouthfeel.

### 1-2. Powder Food Product For Preparing Artificial Fruit Flesh

The powder food product can be used to prepare an artificial fruit flesh. The powder food product can be prepared by combining the particulate composition of the present invention with any fruit juice, flavor, coloring agent, sweetener, condiment, and the like. In this way, by using this powder food product, for example, artificial fruit fleshes having a mouthfeel and flavor of any fruit fleshes such as melon, apple, pear, orange, strawberry, watermelon, peach, grape, kiwi fruit, mango, chestnut, and the like as well as appearances very similar to fruit flesh tissues of these can be prepared.

### 1-3. Powder Food Product For Preparing Sol Food Product

The powder food product can be used to prepare a sol food product such as jam, sauce, spread, dressing, filling, or topping. This sol food product can be used by placing the sol food product on a food product such as bread or pie, sandwiching the sol food product between food products, or putting the sol food product in a food product as a topping having an artificial fruit flesh mouthfeel. Alternatively, this sol food product can be used as a condiment to be put on salad in a fluid or semi-fluid form such as mayonnaise. In addition, since this sol food product has heating resistance, the sol food product can also be used as a topping for a food product that is heated at a high temperature such as pizza, for example.

### 1-4. Powder Food Product For Preparing Patty Food Product

The powder food product can be used to prepare a patty food product such as kamaboko (boiled fish paste), ham, sausage, or hamburg steak. By adding this powder food product to a raw material such as an animal meat or a fish meat and thickening the raw material, a patty food product molded in a paste or mousse form can be prepared.

### 1-5. Powder Food Product For Preparing Coating Agent

The powder food product can be used to prepare a coating agent. For example, this powder composition is dissolved in water to obtain nappage, which can then be used for coating the surface of a food product such as a fruit or a dessert. In addition, by applying the coating agent to the surface of a food product, an artificial fruit flesh mouthfeel can be imparted to the food product. For example, by applying the coating agent to the surface of a Popsicle, a Popsicle having an artificial fruit flesh mouthfeel can be provided.

### 2. Gel Food Product

A gel food product that partially or fully contains a gel composition prepared by using the particulate composition of the present invention is provided. The gel food product includes, for example, a jelly beverage, an artificial fruit flesh, a sol food product, an additive of a patty food product, a coating agent, and the like, but is not limited to these. The characteristics of a jelly beverage, an artificial fruit flesh, a sol food product, an additive of a patty food product, and a coating agent are as described above.

### Examples

Hereinafter, the present invention will be described in detail by giving Examples. Note that the present invention is not limited to Examples given below at all.

### [Test Example 1] Making Divalent Metal Ion Component Slowly Dissolve

### (1) Measurement of Rate of Dissolution of Granulated Calcium Lactate

To 100 mL of warm water at each of 70°C and 75°C, 0.16 g of granulated calcium lactate (produced by Taihei Chemical Industrial Co., Ltd.) was added, and a change in elution of calcium ion with time was measured. Note that the weight-average particle size of the granulated calcium lactate was about 200 µm.

For the measurement, compact calcium ion meter LAQUAttwin (registered trademark) manufactured by Horiba, Ltd. was used.

### (2) Measurement of Rate of Dissolution of Calcium Lactate (Without Granulation)

To warm water at each of 70°C and 75°C, 0.16 g of a fine powder of calcium lactate that was not granulated was added, and a change in elution of calcium ion with time was measured. The measurement device is as described above. Note that the weight-average particle size of calcium lactate that was not granulated was about 15 µm.

### (3) Results of Measurement of Granulated Calcium Lactate

In warm water at 70°C, the granules remained at the time of 30 seconds after addition, and the granules were completely dissolved and became invisible at the time of 5 minutes after addition.

In the warm water at 75°C, the concentration of calcium ions did not reach 150 ppm within 5 seconds after the addition, and reached 150 ppm within 15 seconds after the addition.

### (4) Results of Measurement of Calcium Lactate (Without Granulation)

In the warm water at 70°C, the granule was dissolved and became invisible immediately after the addition.

In the warm water at 75°C, the concentration of calcium ions reached 150 ppm within 5 seconds after the addition.

### [Test Example 2] Making Acid Component Slowly Dissolve

### (1) Measurement of Rate of Dissolution of Coated Citric Acid

As a coated citric acid, CCA (acidulant preparation) manufactured by San-Ei Gen F.F.I., Inc. was used.

To 100 mL of warm water at 70°C, 0.3 g of coated citric acid was added, and a change in pH of the solution with time was measured. For the measurement, portable pH meter HM-25R of DKK-TOA CORPORATION was used.

### (2) Citric Acid (Without Coating)

To 100 mL of warm water at 70°C, 0.3 g of uncoated citric acid was added, and a change in pH of the solution with time was measured. The measurement device is as described above.

### (3) Results of Measurement of Coated Citric Acid

The pH of the solution did not fall below 5.0 within 5 seconds after the addition, the pH fell below 5.0 within 15 seconds after the addition, and the pH became around 4.0 within 30 seconds after the addition.

### (4) Results of Measurement of Citric Acid (Without Coating)

The citric acid was dissolved immediately after the addition, and the pH of the solution became around 4.0.

### [Test Example 3] Formation of Non-uniform Gel Composition (Hot Gel)

Warm gel compositions (hot gels) were prepared by using particulate compositions containing raw materials described in Table 1. Specifically, 20 g of each particulate composition was mixed with 100 mL of warm water at 70°C, and after 20 minutes, a gel composition formed at a product temperature of 35 to 45°C was observed.

**Table 1. Composition of particulate composition**

| Component (part by mass) | | Examp le 1 | Comparati ve Example 1 | Examp le 2 | Examp le 3 | Examp le 4 | Examp le 5 | Examp le 6 |
|---|---|---|---|---|---|---|---|---|
| LM pectin¹ | | 3 | 3 | 3 | 3 | 3 | 3 | 3 |
| Divalent metal ion compone nt | Granulate d calcium lactate² | 0.8 | - | 0.8 | - | 0.8 | 0.8 | 0.8 |
| | Calcium lactate (without granulatio n)³ | - | 0.8 | - | 0.8 | - | - | - |
| Acid compone nt | Coated citric acid⁴ | 2.1 | - | - | 2.1 | 2.1 | 2.1 | 2.1 |
| | Citric acid (without coating) | - | 2.1 | 2.1 | - | - | - | - |
| Gellant | Agar⁵ | 1.7 | 1.7 | 1.7 | 1.7 | - | - | - |
| | Gellan gum | - | - | - | - | 1.7 | - | - |
| | Sodium alginate | - | - | - | - | - | 1.7 | - |
| pH adjuster | | 1.3 | 1.3 | 1.3 | 1.3 | 1.3 | 1.3 | 1.3 |
| pH | | 4 | 4 | 4 | 4 | 4 | 4 | 4 |

| | | | | | | | | |
|---|---|---|---|---|---|---|---|---|
| ¹: "LM QS1000C" (Unipectin) UNITEC FOODS Co., Ltd. ²: The same as that of Test Example 1 was used. ³: The same as that of Test Example 1 was used. ⁴: The same as that of Test Example 2 was used. ⁵: "Ina Kanten Max (registered trademark)" Ina Food Industry Co., Ltd. | | | | | | | | |

Each gel composition was evaluated in accordance with evaluation criteria shown below. Evaluation results are shown in Table 2.
⊚ (Best): A non-uniform gel composition containing a large amount of granular gel having a size that added a mouthfeel was formed.
○(Good): Although the amount was less than the granular gel of Example 1, a sufficient amount of the non-uniform gel composition was formed.
Δ (Fair): Although the granular gel having a size that added a mouthfeel was formed, the amount thereof was small.
× (Poor): No granular gel having a size that added a mouthfeel was formed.

**Table 2. Formation of non-uniform gel composition (hot gel)**

| | Example 1 | Comparative Example 1 | Example 2 | Example 3 | Example 4 | Example 5 | Example 6 |
|---|---|---|---|---|---|---|---|
| Evaluation | ⊚ | × | ○ | ○ | ○ | ○ | ○ |

### [Test Example 4] Stability of Non-uniform Gel Composition (Hot Gel)

The gel compositions of Examples 1 to 6 prepared in Test Example 3 were observed again 24 hours after the preparation, and were evaluated in accordance with evaluation criteria shown below. Evaluation results are shown in Table 3.
⊚ (Best): The non-uniform gel composition containing a large amount of granular gel was maintained.
○ (Good): Although the amount of the granular gel was less than Example 1, the non-uniform gel composition was maintained.
Δ (Fair): The non-uniform gel composition formed in Test Example 3 was changed to a uniform gel composition.

**Table 3. Stability of non-uniform gel composition (hot gel)**

| | Example 1 | Example 2 | Example 3 | Example 4 | Example 5 | Example 6 |
|---|---|---|---|---|---|---|
| Evaluation | ⊚ | ○ | ○ | ○ | ○ | Δ |

### [Test Example 5] Formation of Non-uniform Gel Composition (Cold Gel)

Cold gel compositions were prepared by using the particulate compositions containing the raw materials described in Table 1. Specifically, 20 g of each particulate composition was mixed with 100 mL of ordinary-temperature water at 20°C, and after 20 minutes, a gel composition formed at a product temperature of 15 to 25°C was observed.

Each gel composition was evaluated in accordance with the same evaluation criteria as in Test Example 3. Evaluation results are shown in Table 4.

**Table 4. Formation of non-uniform gel composition (cold gel)**

| | Example 1 | Comparative Example 1 | Example 2 | Example 3 | Example 4 | Example 5 | Example 6 |
|---|---|---|---|---|---|---|---|
| Evaluation | ⊚ | × | ○ | ○ | ○ | ○ | ○ |

### [Test Example 6] Formation of Non-uniform Gel Composition (Cold Gel)

Cold gel compositions (cold gels) were prepared by using particulate compositions containing raw materials described in Table 5. Specifically, 20 g of each particulate composition was mixed with 100 mL of warm water at 20°C, and after 20 minutes, a gel composition formed at a product temperature of 15 to 25°C was observed.

**Table 5. Composition of particulate composition**

| Component (part by mass) | | Comparative Example 2 | Example 7 | Example 8 | Example 9 |
|---|---|---|---|---|---|
| LM pectin¹ | | 3 | 3 | 3 | 3 |
| Divalent metal ion component | Granulated calcium lactate² | - | 0.8 | 0.8 | - |
| | Calcium lactate (without granulation)³ | 0.8 | - | - | 0.8 |
| Acid component | Coated citric acid⁴ | - | 2.1 | - | 2.1 |
| | Citric acid (without coating) | 2.1 | - | 2.1 | - |
| Gellant | Agar⁵ | - | - | - | - |
| | Gellan gum | - | - | - | - |
| | Sodium alginate | - | - | - | - |
| pH adjuster | | 1.3 | 1.3 | 1.3 | 1.3 |
| pH | | 4 | 4 | 4 | 4 |

| | | | | | |
|---|---|---|---|---|---|
| 1 to 5: The same as in Table 1 | | | | | |

Each gel composition was evaluated in accordance with the evaluation criteria shown in Test Example 3. Evaluation results are shown in Table 6.

**Table 6. Formation of non-uniform gel composition (cold gel)**

| | Comparative Example 2 | Example 7 | Example 8 | Example 9 |
|---|---|---|---|---|
| Evaluation | × | ○ | Δ | ○ |

### [Test Example 7] Stability of Non-uniform Gel Composition (Cold Gel)

The gel compositions of Examples 7 to 9 prepared in Test Example 6 were observed again 24 hours after the preparation, and were evaluated in accordance with the evaluation criteria shown in Test Example 4. Evaluation results are shown in Table 7.

**Table 7. Stability of non-uniform gel composition (cold gel)**

| | Example 7 | Example 8 | Example 9 |
|---|---|---|---|
| Evaluation | Δ | Δ | Δ |

### [Test Example 8] Application of Non-uniform Gel Composition

### (1) Nappage

A pie crust, a custard cream, and apple preserved in syrup were placed on top of another from the bottom, and baked in an oven. The non-uniform gel composition of Example 1 was applied onto the apple as a nappage, followed by cooling to prepare an apple pie. The apple pie thus obtained had glaze on its surface. **In** addition, the apple was firmly stuck to the apple pie, and the apple was not displaced even when the apple pie was cut with a knife.

### (2) Dispersion of Fruit Flesh

Pieces of apple preserved in syrup were dispersed in the non-uniform gel composition of Example 1. This was placed on a baked pie crust, followed by cooling to prepare an apple pie. The apple pie thus obtained was such that the pieces of apple pie were stuck in the state of being uniformly dispersed in the gel composition. In addition, even when the apple pie was turned upside down, the gel composition or the apple did not fall down.

As described above, the particulate composition of the present invention is easily dissolved in water at any temperature to form a non-uniform gel composition. This non-uniform gel composition can be solidified in a short time and can be solidified in a warm state, and thus can be used as a hot gel.

The gel composition of the present invention is excellent in stability after preparation. The gel composition of the present invention is capable of maintaining a granular gel having a unique mouthfeel stably for a long time particularly in the case where the gel composition contains a gellant other than the pectin.

The gel composition of the present invention does not melt even when applied to a worm food product, and is excellent in adhesiveness and dispersibility.

Therefore, the particulate composition of the present invention has a high applicability to food products.

## Claims

1. A particulate composition for preparing a gel composition by mixing with water, comprising a pectin, a divalent metal ion component, and an acid component, wherein the divalent metal ion component and/or the acid component has been made to slowly dissolve in water.

2. The composition according to claim 1, wherein the divalent metal ion component made to slowly dissolve is such that when 0.16 g of the divalent metal ion component made to slowly dissolve is added to 100 mL of water at 75°C, it takes 5 seconds or more for a concentration of the divalent metal ion component in the water to reach 80% of a final concentration thereof.

3. The composition according to claim 1, wherein the acid component made to slowly dissolve is such that when 0.3 g of the acid component made to slowly dissolve is added to 100 mL of water at 70°C, it takes 15 seconds or more for pH of the water to reach pH 4.0 to 5.0.

4. The composition according to claim 1, wherein after the composition is mixed with water, it takes 5 seconds or more for a concentration of the divalent metal ion component in the mixture to reach 80% of a final concentration thereof.

5. The composition according to claim 1, wherein after the composition is mixed with water, it takes 15 seconds or more for the mixture to reach a final pH thereof.

6. The composition according to claim 1, wherein the divalent metal ion component and/or the acid component is integrated with a water-disintegrable substance to be made to slowly dissolve in water.

7. The composition according to claim 1, wherein the divalent metal ion component and/or the acid component is formed into a granule to be made to slowly dissolve in water.

8. The composition according to claim 7, wherein when water at 75°C and the particulate composition are mixed, the granules maintain a granular form at the time of 30 seconds after mixing, and the granules become invisible at the time of 5 minutes after mixing.

9. The composition according to claim 1, further comprising a gellant other than the pectin.

10. The composition according to claim 9, wherein the gellant is one or more selected from the group consisting of agar, gellan gum, starch, and sodium alginate.

11. The composition according to claim 1, which is a particulate composition for mixing with warm water to prepare a gel composition.

12. A gel composition prepared by using the particulate composition according to any one of claims 1 to 11.

13. A food product comprising the particulate composition according to any one of claims 1 to 11.

14. A food product comprising a gel composition prepared by using the particulate composition according to any one of claims 1 to 11.
